# EUROPÄISCHE PATENTSCHRIFT

(11) **EP 2 853 046 B1**
(45) Veröffentlichungstag und Bekanntmachung des Hinweises auf die Patenterteilung: **26.09.2018**
(21) Anmeldenummer: 13756810.1
(22) Anmeldetag: 22.05.2013
(51) Int. Cl.: H04B 10/69

(54) **SCHALTUNGSANORDNUNG UND VERFAHREN ZUM EMPFANGEN DIGITALER OPTISCHER SIGNALE**
CIRCUIT CONFIGURATION AND METHOD FOR RECEIVING DIGITAL OPTICAL SIGNALS
ENSEMBLE CIRCUIT ET PROCÉDÉ DE RÉCEPTION DE SIGNAUX OPTIQUES NUMÉRIQUES

(30) Priorität: 22.05.2012 DE 102012104420
(43) Veröffentlichungstag der Anmeldung: 01.04.2015
(73) Patentinhaber: Silicon Line GmbH, 80687 München (DE)
(72) Erfinder: GROEPL, Martin, 87527 Sonthofen Oberallgaeu (DE); FRITSCHE, Holger, 89520 Heidenheim an der Brenz (DE); HOELTKE, Holger, 80995 Muenchen (DE)
(74) Vertreter: Hofmann, Andreas
(86) Internationale Anmeldenummer: PCT/DE2013/200015
(87) Internationale Veröffentlichungsnummer: WO 2013/174376

(56) Entgegenhaltungen:
- US-A1- 2011 135 315

## Beschreibung

### Technisches Gebiet

Die vorliegende Erfindung betrifft grundsätzlich das technische Gebiet serialisierter optischer und/oder elektrischer Signalverbindungen; im Spezielleren betrifft die vorliegende Erfindung eine Schaltungsanordnung gemäß dem Oberbegriff des Anspruchs 1 sowie ein Verfahren gemäß dem Oberbegriff des Anspruchs *9 (vgl. Druckschrift* US 2011/0135315 A1 *aus dem Stand der Technik).*

### Stand der Technik, insbesondere dessen Nachteile und technische Probleme

Hochbitratige serielle Verbindungen - seien sie elektrisch oder optisch - erfordern in der Regel, dass der zu übertragende Bitstrom D[irect]C[urrent]-balanced oder DC-balanciert ist. Grundlegende Schaltungsteile in einer derartigen Übertragungsstrecke sind konzeptionell auf diese Eigenschaft der DC-Balanciertheit des Datenstroms angewiesen, um zu funktionieren.

Um einen beliebigen, im Regelfall DC-unbalancierten und damit für die optische Übertragung zunächst nicht vorkonditionierten Datenstrom in einen DC-balancierten Datenstrom zu konvertieren, können Transkodierungs-Schemata zum Einsatz gelangen, die zwar technisch beherrschbar sind, jedoch zum einen einen zusätzlichen Schaltungsaufwand bedeuten und zum anderen die Netto-Bitrate durch den entstehenden Transkodierungs-Overhead deutlich absenken.

So wird beispielsweise bei einem Overhead von zwanzig Prozent aus einer Netto-Bitrate von fünf Gigabit pro Sekunde (5 Gbit/s) im Protocol-Layer eine Brutto-Bitrate von sechs Gigabit pro Sekunde (6 Gbit/s) im Physical-Layer.

Als Grundlage für derartige 5b/6b-Blöcke werden zumeist die Anleitung und die Tabelle von Albert X. Widmer (IBM Research Division) eingesetzt. Zum diesbezüglichen technologischen Hintergrund kann exemplarisch auf die Druckschrift US 6 911 921 B2 aus dem Stand der Technik aufmerksam gemacht werden.

Neben dem Entstehen eines Daten-Overheads erhöht der Transkodierungsvorgang auch den Energieverbrauch der gesamten Übertragungsstrecke. Gerade bei sehr hohen Bitraten ist der Anteil der internen Datenaufbereitung am Gesamtenergieverbrauch beträchtlich, so dass der Einsatz derartiger Transkodierungsschemata nicht immer eine bevorzugte Option darstellt.

Da nun aber der für die optische Übertragung zunächst nicht vorkonditionierte Datenstrom im Regelfall DC-unbalanciert ist, das heißt da nun aber die logischen "1" und die logischen "0" im durch die optische Übertragung eingehenden Datenstrom im Regelfall nicht gleichverteilt vorkommen, kann mittels konventionellerweise zum Einsatz gelangender Methoden nicht sauber extrahiert werden, auf welchem Spannungsniveau des eingehenden Datenstroms die Mitte zwischen dem logisch "1" und logisch "0" liegt.

Das Vorsehen einer D[irect]C[urrent]-Stromkompensation zum Ermitteln einer Entscheidungs- oder Unterscheidungsschwelle zwischen hoher optischer Eingangsleistung (logisch "1") und niedriger optischer Eingangsleistung (logisch "0") dient nun dazu, dass der verbleibende, sich nämlich aus dem Eingangsstrom minus dem DC-Kompensationsstrom ergebende Strom bipolar ist, das heißt entweder positive Stromrichtung (= logisch "1" minus DC-Kompensationsstrom) oder negative Stromrichtung (= logisch "0" minus DC-Kompensationsstrom) aufweist.

Exemplarisch kann zum technologischen Hintergrund der DC-Stromkompensation auf die Seiten 140 ff des Lehrbuchs "Broadband Circuits for Optical Fiber Communication" von Eduard Säckinger aufmerksam gemacht werden, das in erster Auflage am 8. April 2005 im Verlag John Wiley & Sons erschienen ist. Die dortige Fig. 5.23 zeigt die Schaltungsanordnung für eine derartige DC-Stromkompensation für eine differentielle Eingangsstufe.

Eine DC-Stromkompensation kann nun automatisch in Abhängigkeit von den Eingangsdaten geregelt werden, was jedoch mit einem gewissen schaltungstechnischen Aufwand verbunden ist, der die Verarbeitung der eingehenden Signale verzögert.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Schaltungsanordnung gemäß dem Oberbegriff des Anspruchs 1 sowie ein Verfahren gemäß dem Oberbegriff des Anspruchs *9* so weiterzubilden, dass beliebige digitale optische Datenströme im Bandbreitenbereich von null Bit pro Sekunde bis in den hohen Gbit/s-Bereich mit möglichst geringem Schaltungsaufwand empfangen und mit möglichst geringem Energieaufwand zur Weiterverarbeitung aufbereitet werden.

Diese Aufgabe wird durch eine Schaltungsanordnung mit den Merkmalen des Anspruchs 1 sowie durch ein Verfahren mit den Merkmalen des Anspruchs *9* gelöst. Vorteilhafte Ausgestaltungen und zweckmäßige Weiterbildungen der vorliegenden Erfindung sind in den jeweiligen Unteransprüchen gekennzeichnet.

Erfindungsgemäß wird bei einer Schaltungsanordnung sowie bei einem Verfahren zum Empfangen digitaler optischer Signale mittels mindestens eines mindestens einem Signaleingangsanschluss vorgeschalteten lichtempfangenden Bauelements, insbesondere mittels mindestens einer Fotodiode, das vom lichtempfangenden Bauelement durch den Signaleingangsanschluss kommende unipolare Stromsignal mittels eines durch mindestens eine Stromquelle bereitgestellten Kompensationsstroms, dessen Wert mittels mindestens eines digitalen Registers definiert wird, in ein bipolares Stromsignal gewandelt.

Hierbei beruht die vorliegende Erfindung auf einem statischen Einstellen, insbesondere statischen Steuern und/oder statischen Regeln, des D[irect]C[urrent]-Kompensationsstroms, wobei dieser Kompensationsstrom in bevorzugter Weise durch mindestens ein statisches digitales Signal, insbesondere durch mindestens ein statisches digitales Datenwort, zum Beispiel mit einer Länge von mehr als einem Bit, eingestellt oder angepasst werden kann und/oder bestimmt sein kann.

Mittels dieses statischen Signals aus dem digitalen Register kann mindestens eine als, zum Beispiel 9 Bit-programmierbarer, Strom-Digital-Analog-Wandler oder Strom-D[igital-to-]A[nalog]C[onverter] ausgebildete Stromquelle derart gesteuert und/oder kontrolliert werden, dass der DC-Kompensationsstrom in einer Art und Weise zur Verfügung gestellt wird, dass das am Signaleingangsanschluss zur Verfügung stehende unipolare Stromsignal in ein bipolares Stromsignal umgewandelt wird.

Hierzu wird das DC-Kompensationsstromsignal geeigneter Größe mittels des Strom-DAC vom Signaleingangsanschluss gegen ein Bezugspotential oder Referenzpotential (GND), insbesondere gegen Erdpotential oder Massepotential oder Nullpotential, geleitet oder "gesinkt" (der Fachbegriff "sinken" ist abgeleitet vom englischen Verb "to sink").

Im Unterschied zu konventionellen Lösungen erfolgt die Einstellung bzw. Steuerung bzw. Regelung der Eingangs-DC-Stromkompensation also nicht in Abhängigkeit von den Eingangsdaten, sondern durch feste Werte, die vom digitalen Register definiert, insbesondere vorgegeben, werden.

Dies ermöglicht es, mit der vorliegenden Erfindung unter Ausnutzung bestimmter Schaltungsanordnungen und/oder bestimmter Schaltungstechniken beliebige Eingangsdaten, das heißt beliebige digitale optische Datenströme im Bandbreitenbereich von null Bit pro Sekunde bis in den hohen Gbit/s-Bereich mit geringem Schaltungsaufwand zu empfangen und mit geringem Energieaufwand zu verarbeiten.

Mittels des opto-elektrischen Wandlers gemäß der vorliegenden Erfindung kann ein beliebiger digitaler optischer Datenstrom so gewandelt und aufbereitet werden, dass am Ausgang des opto-elektrischen Wandlers eine differentielle Last von beispielsweise einhundert Ohm so getrieben werden kann, dass ein differentielles Spannungssignal von beispielsweise +/-200 Millivolt zur Verfügung gestellt wird.

Gemäß einer vorteilhaften Ausgestaltungsform der vorliegenden Erfindung weist das digitale Register mindestens einen Memory-Controller auf, der auf mindestens ein, insbesondere programmierbares und/oder insbesondere schaltungsinternes, Speichermodul volatiler und/oder nicht-volatiler Art dergestalt zugreifen kann, dass das Speichermodul durch den Memory-Controller angesteuert und/oder programmiert werden kann.

Hierdurch ist die Schaltungsanordnung in charakteristischen Details so verändert, dass sie für spezifische Logikpegel, zum Beispiel für logisch "0" oder für logisch "1", des Eingangsstromsignals am Signaleingangsanschluss optimal eingestellt ist, zum Beispiel den, insbesondere arithmetischen und/oder insbesondere geometrischen, Mittelwert zwischen der hohen optischen Eingangsleistung (logisch "1") und der niedrigen optischen Eingangsleistung (logisch "0") findet, aus dem der Wert der DC-Kompensation ermittelt wird, der wiederum vom durch den Signaleingangsanschluss kommenden unipolaren Strom-Eingangssignal abgezogen wird, um das bipolare Stromsignal zur weiteren Verarbeitung zur Verfügung zu haben.

*Bei* der vorliegenden Erfindung *wird* die Verstärkung (sogenannter TIA-Gain) mindestens einer dem Signaleingangsanschluss nachgeschalteten, als Transimpedanzverstärker ausgebildeten Eingangsstufe mittels mindestens eines, zum Beispiel 2 Bitprogrammierbaren, Spannungs-Digital-Analog-Wandlers oder Spannungs-D[igital-to-]A[nalog]C[onverter] angepasst.

Gemäß einer bevorzugten Weiterbildung der vorliegenden Erfindung ist beim Aufbau der optischen Übertragungsstrecke eine einmalige Programmierung ausreichend, um eine korrekte Funktion des opto-elektrischen Wandlers gemäß der vorliegenden Erfindung zu gewährleisten.

Die Schaltungsanordnung gemäß der vorliegenden Erfindung sowie das Verfahren gemäß der vorliegenden Erfindung stellen eine Möglichkeit dar, sowohl DC-Signale als auch höchstfrequente Daten über den gleichen Übertragungskanal unkodiert optisch zu übertragen. Mittels der vorliegenden Erfindung ist es möglich, echte Opto-Koppler für höchste Gigabit-Datenraten bereitzustellen.

Das Empfängerteil der Schaltungsanordnung sowie dessen Funktionsweise ermöglichen es, einen beliebig kodierten oder unkodierten, nicht DC-balancierten, seriellen Bitstrom einer optischen Datenübertragungsstrecke fehlerfrei zu empfangen. Im Unterschied zu Lösungen aus dem Stand der Technik bieten die Schaltungsanordnung gemäß der vorliegenden Erfindung sowie das Verfahren gemäß der vorliegenden Erfindung die Möglichkeit, einen Bitstrom auf stromsparende Weise zu verarbeiten, und dies bei einer deutlich verminderten Schaltungskomplexität in der Datenaufbereitung.

Die vorliegende Erfindung betrifft schließlich die Verwendung mindestens einer Schaltungsanordnung gemäß der vorstehend dargelegten Art und/oder eines Verfahrens gemäß der vorstehend dargelegten Art zum opto-elektrischen Wandeln hochbitratiger serieller digitaler optischer Signale.

### Kurze Beschreibung der Zeichnungen

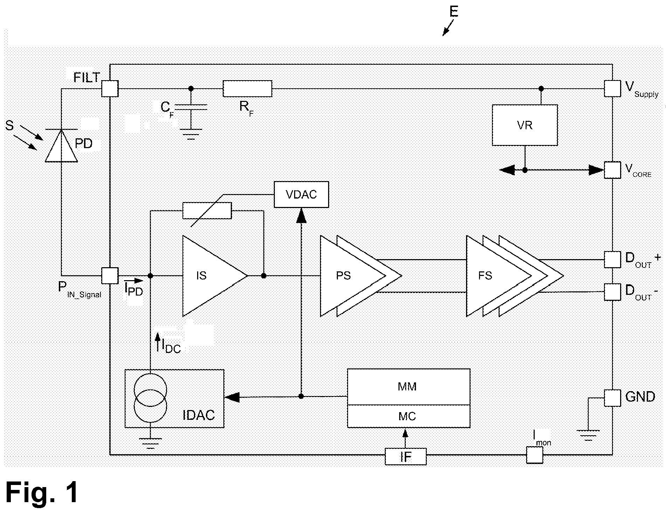

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch *9* nachgeordneten Ansprüche verwiesen, andererseits werden weitere Ausgestaltungen, Merkmale und Vorteile der vorliegenden Erfindung nachstehend unter Anderem anhand des durch Fig. 1 veranschaulichten Ausführungsbeispiels näher erläutert. Es zeigt:
- Fig. 1: in konzeptuell-schematischer Darstellung ein Ausführungsbeispiel für eine Schaltungsanordnung gemäß der vorliegenden Erfindung, die nach dem Verfahren gemäß der vorliegenden Erfindung arbeitet.

### Bester Weg zur Ausführung der vorliegenden Erfindung

Mittels der anhand Fig. 1 veranschaulichten Schaltungsanordnung E gemäß der vorliegenden Erfindung können digitale optische Signale S empfangen werden. Hierzu ist eingangs der Schaltungsanordnung E ein lichtempfangendes Bauelement in Form einer Fotodiode PD vor einem Signaleingangsanschluss P_{IN-Signal} angeordnet.

Der Fotodiode PD ist ein Filtereingangsanschluss FILT vorgeschaltet, der über ein
- einen Kondensator C_{F} und
- einen Ohmschen Widerstand R_{F}
aufweisendes Filterglied einer extern angelegten Versorgungsspannung V_{Supply} zugeordnet ist, die sich exemplarisch im Bereich zwischen etwa 2,5 Volt und etwa 3,3 Volt bewegen kann. Die vom Filterwiderstand R_{F} abgewandte Kondensatorplatte des Filterkondensators C_{F} liegt auf Bezugs- oder Referenzpotential GND, insbesondere auf Erdpotential oder Massepotential oder Nullpotential.

Zum Erzeugen einer zusätzlichen Versorgungsspannung V_{CORE}, die kleiner als die extern angelegte Versorgungsspannung V_{Supply} ist, insbesondere zwischen etwa 1,0 Volt und etwa 1,5 Volt beträgt, ist in Fig. 1 zusätzlich ein Spannungsregler VR vorgesehen.

Durch verschiedene technische Maßnahmen ist die Schaltungsanordnung E, insbesondere eine dem Signaleingang P_{IN-Signal} nachgeschaltete und als Transimpedanzverstärker ausgebildete Eingangsstufe IS der Schaltungsanordnung E, so angepasst, dass beliebige digitale Datenströme S im Bandbreitenbereich von null Bit pro Sekunde bis in den hohen Gbit/s-Bereich mit möglichst geringem Schaltungsaufwand empfangen und mit möglichst geringem Energieaufwand zur Weiterverarbeitung aufbereitet werden, wobei als Ergebnis dieses Aufbereitens an einer Endstufe FS nachgeordneten Ausgangsanschlüssen D_{OUT}+, D_{OUT}- des opto-elektrischen Wandlers E
- ein differentielles Spannungssignal von beispielsweise +/-200 Millivolt zur Verfügung werden kann und/oder
- eine differentielle Last von beispielsweise einhundert Ohm getrieben werden kann.

Auf die Transimpedanz-Eingangsstufe IS folgt eine Vor- oder Zwischenstufe PS, mittels derer die Amplitude des Ausgangssignals der Transimpedanz-Eingangsstufe IS derart angepasst werden kann, dass die Amplitude dieses Signals möglichst groß wird, das Signal selbst jedoch noch ein möglichst hohes Maß an Signalintegrität aufweist, das heißt nicht nennenswert durch Verzerrung jitterbehaftet ist.

Um einen durch eine Stromquelle IDAC bereitstellbaren Kompensationsstrom I_{DC}, mittels dessen das vom lichtempfangenden Bauelement PD durch den Signaleingangsanschluss P_{IN-Signal} kommende unipolare Stromsignal I_{PD} in ein bipolares Stromsignal I_{PD}-I_{DC} gewandelt werden kann, definieren zu können, ist gemäß Fig. 1 ein digitales Register MM, MC vorgesehen, das
- ein programmierbares schaltungsinternes volatiles / nicht-volatiles Speichermodul MM und
- einen Memory-Controller (MC), der auf das Speichermodul MM zugreifen kann,
aufweist.

Mittels dieses Memory-Controllers MC, dem ein Interface oder eine Schnittstelle IF zum Einstellen und/oder zum Verändern digitaler Werte zugeordnet ist, wird der Signaleingangsanschluss P_{IN-Signal} für spezifische Logikpegel, insbesondere für logisch "0" oder für logisch "1", des eingehenden unipolaren Stromsignals I_{PD} eingestellt.

Um hierbei das gemittelte oder durchschnittliche unipolare Stromsignal I_{PD} bestimmen und/oder überwachen zu können, ist - in Fig. 1 benachbart zur Schnittstelle IF - ein Diagnoseanschluss der Schaltungsanordnung E angeordnet.

Der Strom-Digital-Analog-Wandler IDAC wird vom digitalen Register MM, MC mit einem statischen digitalen Signal in Form eines mehrere Bit aufweisenden Datenworts beaufschlagt. Der Strom-Digital-Analog-Wandler IDAC wandelt die von diesem Datenwort beinhaltete (digitale) Information in den (analogen) D[irect]C[urrent]-Kompensationsstrom I_{DC} um; mit anderen Worten ist der D[irect]C[urrent]-Kompensationsstrom I_{DC} des Strom-Digital-Analog-Wandler IDAC durch dieses Datenwort eingestellt und definiert.

Mithilfe dieses Kompensationsstroms I_{DC} kann das unipolare Stromsignal I_{PD} mittels Differenzbildung (= unipolares Stromsignal I_{PD} minus DC-Kompensationsstrom I_{DC}) in ein bipolares Stromsignal überführt werden, indem der Kompensationsstrom I_{DC} vom Niveau des Signaleingangs P_{IN-Signal} durch den Strom-Digital-Analog-Wandler IDAC in Richtung des Bezugs- oder Referenzpotentials GND geleitet, insbesondere gesinkt, wird.

Hierzu ist der zum Beispiel 9 Bit-programmierbare Strom-Digital-Analog-Wandler IDAC zwischen das Speichermodul MM des digitalen Registers MM, MC, den Signaleingangsanschluss P_{IN-Signal} und das Bezugs- oder Referenzpotential GND geschaltet.

Ergänzend zum Strom-Digital-Analog-Wandler IDAC kann zwischen das Speichermodul MM und den Eingangsanschluss der Eingangsstufe IS ein zum Beispiel 2 Bit-programmierbarer Spannungs-Digital-Analog-Wandler VDAC geschaltet sein, um die Verstärkung (sogenannter TIA-Gain) der Transimpedanz-Eingangsstufe IS anzupassen, insbesondere zu steuern und/oder zu regeln.

Mittels der gemäß der vorliegenden Erfindung als Hochgeschwindigkeits-Opto-Koppler oder High-Speed-Opto-Koppler ausgerüsteten Schaltungsanordnung E können beliebige digitale Datenströme S, zum Beispiel unkodierte Videosignale, einer optischen Übertragungsstrecke von null Bit pro Sekunde bis in den hohen Gbit/s-Bereich empfangen werden.

Exemplarisch kann die Schaltungsanordnung E Teil der Verbindung zweier Geräte in einer Central-Office-Umgebung sein, zum Beispiel mindestens eines Servers mit mindestens einer Network-Storage-Device (Netzwerk-Speicher-Einrichtung).

### Bezugszeichenliste

- C_{F}: Kondensator, insbesondere Filterkondensator
- D_{OUT}+: positiver Ausgangsanschluss, insbesondere positiver differentieller Ausgangsanschluss
- D_{OUT}-: negativer Ausgangsanschluss, insbesondere negativer differentieller Ausgangsanschluss
- E: Schaltungsanordnung, insbesondere opto-elektrischer Wandler
- PD: lichtempfangendes Bauelement, insbesondere Fotodiode
- FILT: Filterausgangsanschluss
- FS: Endstufe
- GND: Bezugspotential oder Referenzpotential, insbesondere Erdpotential oder Massepotential oder Nullpotential
- IDAC: Stromquelle, insbesondere Strom-Digital-Analog-Wandler, zum Beispiel 9 Bitprogrammierbarer Strom-Digital-Analog-Wandler
- I_{DC}: Kompensationsstrom, insbesondere einstellbar und/oder anpassbar und/oder bestimmt durch mindestens ein statisches digitales Signal, zum Beispiel durch mindestens ein statisches digitales Datenwort, wie etwa von mehr als einem Bit Länge
- IF: Interface oder Schnittstelle zum Memory Controller MC
- Iₘₒₙ: Diagnoseanschluss zum Überwachen und/oder zum Bestimmen des gemittelten oder durchschnittlichen unipolaren Stromsignals I_{PD}
- I_{PD}: unipolares Stromsignal
- I_{PD}-I_{DC}: bipolares Stromsignal
- IS: Eingangsstufe, insbesondere single-ended Eingangsstufe, zum Beispiel Transimpedanzstufe, wie etwa Transimpedanzverstärker oder T[rans]I[mpedance]A[mplifier]
- MC: Memory-Controller, insbesondere Memory-Controllermodul zum Ansteuern und/oder Programmieren des Speichermoduls MM
- MM: Speichermodul, insbesondere programmierbares und/oder insbesondere schaltungsinternes Speichermodul
- P_{IN-Signal}: Signaleingangsanschluss
- PS: Vorstufe oder Zwischenstufe
- R_{F}: Ohmscher Widerstand, insbesondere Ohmscher Filterwiderstand
- S: Signal, insbesondere digitales optisches Signal
- VDAC: Spannungs-Digital-Analog-Wandler, insbesondere 2 Bit-programmierbarer Spannungs-Digital-Analog-Wandler
- V_{CORE}: zusätzliche Versorgungsspannung
- VR: Spannungsregler
- V_{Supply}: extern angelegte Versorgungsspannung

## Patentansprüche

1. Schaltungsanordnung (E) zum Empfangen digitaler optischer Signale (S) mittels mindestens eines mindestens einem Signaleingangsanschluss (P_{IN-Signal}) vorgeschalteten lichtempfangenden Bauelements (PD), insbesondere mittels mindestens einer Fotodiode, *welche Schaltungsanordnung (E) aufweist:*
- mindestens ein digitales Register (MM, MC) eingerichtet zum Definieren eines durch mindestens eine Stromquelle (IDAC) bereitstellbaren Kompensationsstroms (I_{DC}), mittels dessen ein vom lichtempfangenden Bauelement (PD) durch den Signaleingangsanschluss (P_{IN-Signal}) kommendes unipolares Stromsignal (I_{PD}) in ein bipolares Stromsignal (I_{PD}-I_{DC}) wandelbar ist,
- *mindestens eine dem Signaleingangsanschluss* (*P_{IN-Signal}*) *nachgeschaltete, als Transimpedanzverstärker ausgebildete Eingangsstufe (IS),*
***gekennzeichnet durch***
*einen dem digitalen Register (MM, MC), insbesondere dem Speichermodul (MM), nachgeschalteten Spannungs-Digital-Analog-Wandler (VDAC), mittels dessen die Verstärkung der Eingangsstufe (IS) anpassbar, insbesondere steuerbar und*/*oder regelbar, ist.*

2. Schaltungsanordnung gemäß Anspruch 1, **dadurch gekennzeichnet, dass** der Kompensationsstrom (I_{DC}) durch mindestens ein statisches digitales Signal, insbesondere durch mindestens ein statisches digitales Datenwort, zum Beispiel mit einer Länge von mehr als einem Bit, einstellbar oder anpassbar ist und/oder bestimmt ist.

3. Schaltungsanordnung gemäß Anspruch 1 oder 2, **dadurch gekennzeichnet, dass** das digitale Register (MM, MC)
- mindestens ein, insbesondere programmierbares und/oder insbesondere schaltungsinternes, Speichermodul (MM) und/oder
- mindestens einen, insbesondere dem Speichermodul (MM) zugeordneten, Memory-Controller (MC)
aufweist.

4. Schaltungsanordnung gemäß Anspruch 3, **dadurch gekennzeichnet, dass** die Stromquelle (IDAC) als mindestens ein dem Speichermodul (MM) nachgeschalteter Strom-Digital-Analog-Wandler ausgebildet ist.

5. Schaltungsanordnung gemäß mindestens einem der Ansprüche 1 bis *4*, **gekennzeichnet durch** mindestens eine, insbesondere der Eingangsstufe (IS) nachgeschaltete, Endstufe (FS) zum Bereitstellen mindestens eines, insbesondere differentiellen, Ausgangssignals an Ausgangsanschlüssen (D_{OUT}+, D_{OUT}-) der Schaltungsanordnung (E).

6. Schaltungsanordnung gemäß mindestens einem der Ansprüche 1 bis *5*, **gekennzeichnet durch** mindestens eine, insbesondere der Eingangsstufe (IS) nachgeschaltete und/oder der Endstufe (FS) vorgeschaltete, Vorstufe oder Zwischenstufe (PS) zum Anpassen der Amplitude des von der Eingangsstufe (IS) kommenden Signals.

7. Schaltungsanordnung gemäß mindestens einem der Ansprüche 1 bis *6*, **gekennzeichnet durch** mindestens eine extern angelegte Versorgungsspannung (V_{Supply}) im Bereich zwischen etwa 2,5 Volt und etwa 3,3 Volt.

8. Schaltungsanordnung gemäß Anspruch *7*, **gekennzeichnet durch** mindestens einen Spannungsregler (VR) zum Erzeugen einer zusätzlichen Versorgungsspannung (V_{CORE}), die kleiner als die extern angelegte Versorgungsspannung (V_{Supply}) ist, insbesondere zwischen etwa 1,0 Volt und etwa 1,5 Volt beträgt.

9. Verfahren zum Empfangen digitaler optischer Signale (S) mittels mindestens eines mindestens einem Signaleingangsanschluss (P_{IN-Signal}) vorgeschalteten lichtempfangenden Bauelements (PD), insbesondere mittels mindestens einer Fotodiode,
*wobei* das vom lichtempfangenden Bauelement (PD) durch den Signaleingangsanschluss (P_{IN-Signal}) kommende unipolare Stromsignal (I_{PD}) mittels eines durch mindestens eine Stromquelle (IDAC) bereitgestellten Kompensationsstroms (I_{DC}), dessen Wert mittels mindestens eines digitalen Registers (MM, MC) definiert wird, in ein bipolares Stromsignal (I_{PD}-I_{DC}) gewandelt wird,
***dadurch gekennzeichnet,***
***dass*** *die Verstärkung mindestens einer dem Signaleingangsanschluss* (*P_{IN-Signal}*) *nachgeschalteten, als Transimpedanzverstärker ausgebildeten Eingangsstufe (IS) mittels mindestens eines Spannungs-Digital-Analog-Wandlers (VDAC) angepasst, insbesondere gesteuert und*/*oder geregelt, wird.*

10. Verfahren gemäß Anspruch *9*, **dadurch gekennzeichnet, dass** der Signaleingangsanschluss (P_{IN-Signal}) mittels mindestens eines dem digitalen Register (MM, MC) zugeordneten Memory-Controllers (MC), der auf mindestens ein, insbesondere programmierbares und/oder insbesondere schaltungsinternes, Speichermodul (MM) zugreifen kann, für spezifische Logikpegel, insbesondere für logisch "0" und/oder für logisch "1", des unipolaren Stromsignals (I_{PD}) eingestellt wird.

11. Verfahren gemäß Anspruch *9* oder *10,* **dadurch gekennzeichnet, dass** das unipolare Stromsignal (I_{PD}) mittels der Stromquelle (IDAC) modifiziert wird, indem der Kompensationsstrom (I_{DC}) vom Signaleingangsanschluss (P_{IN-Signal}) gegen ein Bezugspotential oder Referenzpotential (GND), insbesondere gegen Erdpotential oder Massepotential oder Nullpotential, geleitet oder gesinkt wird.

12. Verwendung mindestens einer Schaltungsanordnung (E) gemäß mindestens einem der Ansprüche 1 bis *8* und/oder eines Verfahrens gemäß mindestens einem der Ansprüche *9* bis *11* zum opto-elektrischen Wandeln hochbitratiger serieller digitaler optischer Signale (S).

## Claims

1. A circuit arrangement (E) for receiving digital optical signals (S) by means of at least one light-receiving component (PD) arranged upstream of at least one signal input port (P_{IN-Signal}), in particular by means of at least one photodiode, said circuit arrangement (E) comprising:
- at least one digital register (MM, MC) provided for defining a compensation current (I_{DC}) which can be provided by at least one current source (IDAC), wherein a unipolar current signal (I_{PD}) coming from the light-receiving component (PD) through the signal input port (P_{IN-Signal}) can be transformed into a bipolar current signal (I_{PD}-I_{DC}) by means of said compensation current (I_{DC}),
- at least one input stage (IS) configured as a transimpedance amplifier arranged downstream of the signal input port (P_{IN-Signal}),
**characterized by**
a voltage digital/analogue converter (VDAC) arranged downstream of the digital register (MM, MC), in particular of the memory module (MM), wherein the amplification of the input stage (IS) can be adapted, in particular controlled and/or regulated, by means of said voltage digital/analogue converter (VDAC).

2. The circuit arrangement according to claim 1, **characterized in that** the compensation current (I_{DC}) can be set or adapted and/or is determined by at least one static digital signal, in particular by at least one static digital data word with, for example, a length of more than one bit.

3. The circuit arrangement according to claim 1 or 2, **characterized in that** the digital register (MM, MC) comprises
- at least one, in particular programmable and/or in particular in-circuit memory module (MM) and/or
- at least one memory controller (MC) associated, in particular, with the memory module (MM).

4. The circuit arrangement according to claim 3, **characterized in that** the current source (IDAC) is configured as at least one current digital/analogue converter arranged downstream of the memory module (MM).

5. The circuit arrangement according to at least one of claims 1 to 4, **characterized by** at least one end stage (FS) arranged downstream of the input stage (IS) for providing at least one, in particular differential output signal at output ports (D_{OUT}+, D_{OUT}-) of the circuit arrangement (E).

6. The circuit arrangement according to at least one of claims 1 to 5, **characterized by** at least one preliminary stage or intermediate stage (PS) arranged, in particular, downstream of the input stage (IS) and/or upstream of the end stage (FS) for adapting the amplitude of the signal coming from the input stage (IS).

7. The circuit arrangement according to at least one of claims 1 to 6, **characterized by** at least one externally applied supply voltage (V_{Supply}) in the range between approximately 2.5 volt and approximately 3.3 volt.

8. The circuit arrangement according to claim 7, **characterized by** at least one voltage regulator (VR) for generating an additional supply voltage (V_{CORE}), which is smaller than the externally applied supply voltage (V_{Supply}), in particular lies between approximately 1.0 volt and approximately 1.5 volt.

9. A method for receiving digital optical signals (S) by means of at least one light-receiving component (PD) arranged upstream of at least one signal input port (P_{IN-Signal}), in particular by means of at least one photodiode,
wherein the unipolar current signal (I_{PD}) coming from the light-receiving component (PD) through the signal input port (P_{IN-Signal}) is transformed into a bipolar current signal (I_{PD}-I_{DC}) by means of a compensation current (I_{DC}) provided by at least one current source (IDAC), the value of the compensation current (I_{DC}) being defined by means of at least one digital register (MM, MC),
**characterized in**
**that** the amplification of at least one input stage (IS) configured as a transimpedance amplifier and arranged downstream of the signal input port (P_{IN-Signal}) is adapted, in particular controlled and/or regulated, by means of at least one voltage digital/analogue converter (VDAC).

10. The method according to claim 9, **characterized in that** the signal input port (P_{IN-Signal}) is set for specific logic levels, in particular for logical "0" and/or for logical "1", of the unipolar current signal (I_{PD}) by means of at least one memory controller (MC) associated with the digital register (MM, MC), wherein the memory controller can access at least one, in particular programmable and/or in particular in-circuit memory module (MM).

11. The method according to claim 9 or 10, **characterized in that** the unipolar current signal (I_{PD}) is modified by means of the current source (IDAC) **in that** the compensation current (I_{DC}) is directed or sunk from the signal input port (P_{IN-Signal}) against a reference potential (GND), in particular against earth potential or ground potential or zero potential.

12. The use of at least one circuit arrangement (E) according to at least one of claims 1 to 8 and/or a method according to at least one of claims 9 to 11 for the opto-electric transformation of high-bitrate serial digital optical signals (S).

## Revendications

1. Ensemble de circuit (E) pour réceptionner des signaux optiques numériques (S) au moyen d'au moins un composant (PD) récepteur de lumière monté en amont d'au moins une borne d'entrée de signaux (P_{IN-Signal}), notamment au moyen d'au moins une photodiode, lequel ensemble de circuit (E) comporte :
- au moins un registre numérique (MM, MC) aménagé pour définir un courant de compensation (I_{DC}) pouvant être mis à disposition par au moins une source de courant (IDAC), au moyen duquel un signal de courant (I_{PD}) unipolaire en provenance du composant (PD) récepteur de lumière via la borne d'entrée de signaux (P_{IN-Signal}) peut être converti en un signal de courant (I_{PD}-I_{DC}) bipolaire,
- au moins un étage d'entrée (IS), monté en aval de la borne d'entrée de signaux (P_{IN-Signal}), conçu sous la forme d'un amplificateur à transimpédance,
**caractérisé par**
un convertisseur de tension numérique/analogique (VDAC), monté en aval du registre numérique (MM, MC), notamment du module de mémoire (MM), au moyen duquel l'amplification de l'étage d'entrée (IS) est adaptable, notamment susceptible d'être commandée et/ou réglée.

2. Ensemble de circuit selon la revendication 1, **caractérisé en ce que** le courant de compensation (I_{DC}) est réglable ou adaptable et/ou est déterminé par au moins un signal numérique statique, notamment par au moins un mot de données numérique, par exemple d'une longueur de plus d'un bit.

3. Ensemble de circuit selon la revendication 1 ou 2, **caractérisé en ce que** e registre numérique (MM, MC) comporte
- au moins un module de mémoire (MM), notamment programmable et/ou notamment interne au circuit, et/ou
- au moins un memory-controller (MC), notamment associé au module de mémoire (MM).

4. Ensemble de circuit selon la revendication 3, **caractérisé en ce que** la source de courant (IDAC) est conçue sous la forme d'au moins un convertisseur de courant numérique/analogique, monté en aval du module de mémoire (MM).

5. Ensemble de circuit selon au moins l'une quelconque des revendications 1 à 4, **caractérisé par** au moins un étage final (FS), notamment monté en aval de l'étage d'entrée (IS), pour mettre à disposition au moins un signal de sortie, notamment différentiel, sur des bornes de sortie (D_{OUT}+, D_{OUT}-) de l'ensemble de circuit (E).

6. Ensemble de circuit selon au moins l'une quelconque des revendications 1 à 5, **caractérisé par** au moins un étage préliminaire ou étage intermédiaire (PS), notamment monté en aval de l'étage d'entrée (IS) et/ou monté en amont de l'étage final (FS), pour adapter l'amplitude du signal en provenance de l'étage d'entrée (IS).

7. Ensemble de circuit selon au moins l'une quelconque des revendications 1 à 6, **caractérisé par** au moins une tension d'alimentation (V_{Supply}) appliquée en externe de l'ordre compris entre environ 2,5 volts et environ 3,3 volts.

8. Ensemble de circuit selon la revendication 7, **caractérisé par** au moins un régulateur de tension (VR) pour générer une tension d'alimentation (V_{CORE}) supplémentaire, qui est inférieure à la tension d'alimentation (V_{Supply}) appliquée en externe, et qui est comprise notamment entre environ 1,0 volt et environ 1,5 volt.

9. Procédé de réception de signaux optiques numériques (S) au moyen d'au moins un composant (PD) récepteur de lumière monté en amont d'au moins une borne d'entrée de signaux (P_{IN-Signal}), notamment au moyen d'au moins une photodiode,
au moyen d'un courant de compensation (I_{DC}), mis à disposition par au moins une source de courant (IDAC), dont la valeur est définie au moyen d'au moins un registre numérique (MM, MC), le signal de courant (I_{PD}) unipolaire provenant du composant (PD) récepteur de lumière via la borne d'entrée de signaux (P_{IN-Signal}) étant converti en un signal de courant (I_{PD}-I_{DC}) bipolaire,
**caractérisé en ce que**
l'amplification d'au moins un étage d'entrée (IS), monté en aval de la borne d'entrée de signaux (P_{IN-Signal}), conçu sous la forme d'un amplificateur à transimpédance est adaptée, notamment commandée et/ou réglée, au moyen d'au moins un convertisseur de tension numérique/analogique (VDAC).

10. Procédé selon la revendication 9, **caractérisé en ce que** la borne d'entrée de signaux (P_{IN-Signal}) est réglée au moyen d'au moins un memory-controller (MC), associé au registre numérique (MM, MC) qui peut accéder à au moins un module de mémoire (MM), notamment programmable et/ou notamment interne au circuit, pour des niveaux logiques spécifiques, notamment pour logique « 0 » et/ou pour logique « 1 », du signal de courant (I_{PD}) unipolaire.

11. Procédé selon la revendication 9 ou 10, **caractérisé en ce que** le signal de courant (I_{PD}) unipolaire est modifié au moyen de la source de courant (IDAC) **en ce que** le courant de compensation (I_{DC}) est dirigé ou baissé de la borne d'entrée de signaux (P_{IN-Signal}) par rapport à un potentiel de référence (GND), notamment par rapport au potentiel de terre ou potentiel de masse ou potentiel zéro.

12. Utilisation d'au moins un agencement de circuits (E) selon au moins l'une quelconque des revendications 1 à 8 et ou d'un procédé selon au moins l'une quelconque des revendications 9 à 11 pour la conversion opto-électrique de signaux optiques numériques sériels (S) à haut débit.
